# EUROPEAN PATENT SPECIFICATION

(11) **EP 2 875 768 B1**
(45) Date of publication and mention of the grant of the patent: **28.12.2016**
(21) Application number: 14194381.1
(22) Date of filing: 21.11.2014
(51) Int. Cl.: A47L 11/40, A47L 11/283

(54) **Robot cleaner**
Reinigungsroboter
Robot nettoyeur

(30) Priority: 25.11.2013 KR 20130143931
(43) Date of publication of application: 27.05.2015
(73) Proprietor: Samsung Electronics Co., Ltd, Gyeonggi-do 16677 (KR)
(72) Inventor: Jeong, Jae Youl, Gyeonggi-do (KR); Park, Sung Jin, Gyeonggi-do (KR); Park, Heum Yong, Gyeonggi-do (KR); Lee, Dong Hun, Gyeonggi-do (KR); Kim, Min Jae, Gyeonggi-do (KR)
(74) Representative: Walaski, Jan Filip

(56) References cited:
- WO-A1-2012/086604
- DE-A1-102011 004 319
- US-A- 5 815 880

## Description

The present invention relates to a robot cleaner which may move through a non-uniform frictional force between a pad and a floor surface.

A robot cleaner is an apparatus which may move in an area to be cleaned by itself without an operation of a user and perform a cleaning operation by sucking foreign substances such as dust from a floor surface. The robot cleaner discriminates distances to obstacles, such as furniture, office appliances, and walls, which are disposed in the area to be cleaned, through a distance sensor, and selectively drives a left wheel motor and a right wheel motor of the robot cleaner to change a direction, and performs the cleaning operation on the area to be cleaned.

Recently, a new robot cleaner which wipes dust from the floor surface as well as the robot cleaner which sucks the foreign substances such as dust from the floor surface is being released. In a conventional robot cleaner, a pad is provided at a bottom surface thereof, and the pad is in contact with the floor surface when the robot cleaner moves, and thus wipes the floor surface. At this time, the robot cleaner moves using a separate moving means.

WO 2012/086604, corresponding to the preamble of claim 1, describes a robot cleaner having rotatable pads that the robot cleaner lifts in order to walk and climb stairs. Auxiliary legs are used to lift the robot, which causes the pads to be raised and placed. Each auxiliary leg is connected to a motor by gears and a link arm. DE 10 2011004319 relates to a robot which has a dry cleaning device and a wet cleaning device. A lifting unit lifts a part of the dry cleaning device and/or a part of the wet cleaning device.

The foregoing described problems may be overcome and/or other aspects may be achieved by one or more embodiments of a robot cleaner which may move in various directions using a non-uniform frictional force between a pad and a floor surface, and may reduce a load applied to a driving source.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

In accordance with one or more embodiments, a robot cleaner may include a plurality of motors configured to transmit a driving force, a pad assembly connected to one of the plurality of motors to receive a rotational force from the motor and configured to rotate in a clockwise or counterclockwise direction to clean a floor surface, and a wire connected to the pad assembly and another one of the plurality of motors so that the pad assembly is tilted by the driving force of the motor, wherein the robot cleaner moves in a particular direction by a non-uniform frictional force between a bottom surface of the pad assembly and the floor surface.

The wire may include a first wire which tilts the pad assembly with respect to an x-axis and a second wire which tilts the pad assembly with respect to a y-axis.

The plurality of motors may include a first motor connected with the first wire, a second motor connected with the second wire, and a third motor configured to rotate the pad assembly around a z-axis in the clockwise or counterclockwise direction.

The first wire may be installed at a first shaft connected to the first motor to be rotated, and the second wire may be installed at a second shaft connected to the second motor to be rotated.

The first shaft may include a first driving shaft connected with the first motor and a first connection shaft geared with the first driving shaft.

The first wire may include a portion configured to connect the first driving shaft and one side of the pad assembly and a portion configured to connect the second connection shaft and the other side of the pad assembly which is opposite to the one side the pad assembly.

The pad assembly may include a rotational plate rotated in the clockwise or counterclockwise direction by the third motor.

The pad assembly may include an elastic member assembly installed at a bottom surface of the rotational plate and a pad unit installed at a bottom surface of the elastic member assembly.

The elastic member assembly may include an elastic body configured to adapt an entire bottom surface of the pad assembly to be in contact with the floor surface and an elastic member receiving part in which the elastic body is received.

The elastic member receiving part may be formed as a flexible tube having a plurality of wrinkles and formed of a rubber material.

The pad unit may include a pad installation part removably installed at a bottom surface of the elastic member receiving part and a pad removably installed at the pad installation part to clean the floor surface.

The rotational plate may have a connection part through which water is supplied from a water tank, and the elastic member assembly and the pad unit may have a water supplying hole in communication with the connection part.

A water supplying member may be installed at the rotational plate, and the water supplying member may include a central hole in communication with the connection part and a side hole formed at a side surface thereof to be in communication with the central hole.

The water supplied through the connection part may be sprayed through the side hole of the water supplying member.

The pad assembly may be provided in plural, and each pad assembly may be driven independently.

In accordance with one or more embodiments, a robot cleaner may include a pad assembly installed at a base and having a pad installed at a bottom surface thereof, a first motor and a second motor which are provided at the base, a third motor connected with the pad assembly to rotate the pad assembly in a clockwise or counterclockwise direction, a first wire connected with the pad assembly and the first motor to tilt the pad assembly with respect to an x-axis, and a second wire connected with the pad assembly and the second motor to tilt the pad assembly with respect to a y-axis, wherein, when the pad assembly is tilted by the first wire or the second wire, the robot cleaner moves in a particular direction by a non-uniform frictional force between the bottom surface of the pad assembly and a floor surface.

A moving direction may be determined by a position having a large frictional force between the bottom surface of the pad assembly and the floor surface and a rotational direction by the third motor.

The first wire may be installed at a first shaft connected to the first motor to be rotated, and the second wire may be installed at a second shaft connected to the second motor to be rotated.

The pad assembly may include an elastic body configured to adapt an entire surface of the pad to be in contact with the floor surface.

The elastic body may be received in a flexible tube having a plurality of wrinkles and formed of a rubber material.

These and/or other aspects will become apparent and more readily appreciated from the following description of embodiments, taken in conjunction with the accompanying drawings of which:
FIG. 1 is a perspective view of a robot cleaner in accordance with one or more embodiment;
FIG. 2 is a view illustrating a state in which a cover of a robot cleaner is removed in accordance with one or more embodiment;
FIG. 3 is an exploded perspective view partially illustrating a robot cleaner in accordance with one or more embodiment;
FIG. 4A and 4B are cross-sectional views partially illustrating a robot cleaner in accordance with one or more embodiment;
FIGS. 5A and 5B are views respectively illustrating a state in which a robot cleaner moves forward in accordance with one or more embodiment;
FIGS. 6A and 6B are views respectively illustrating a state in which a robot cleaner moves diagonally in accordance with one or more embodiment; and
FIG. 7 is an exploded perspective view of a pad assembly of a robot cleaner in accordance with one or more embodiment.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

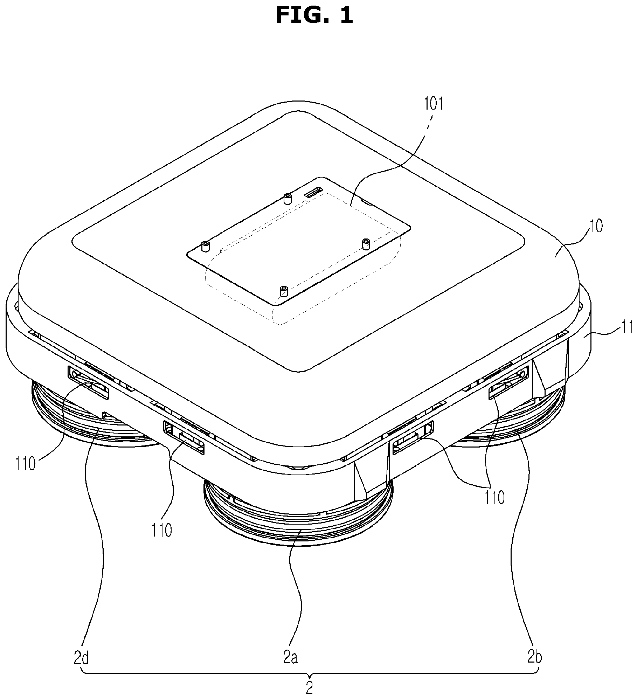

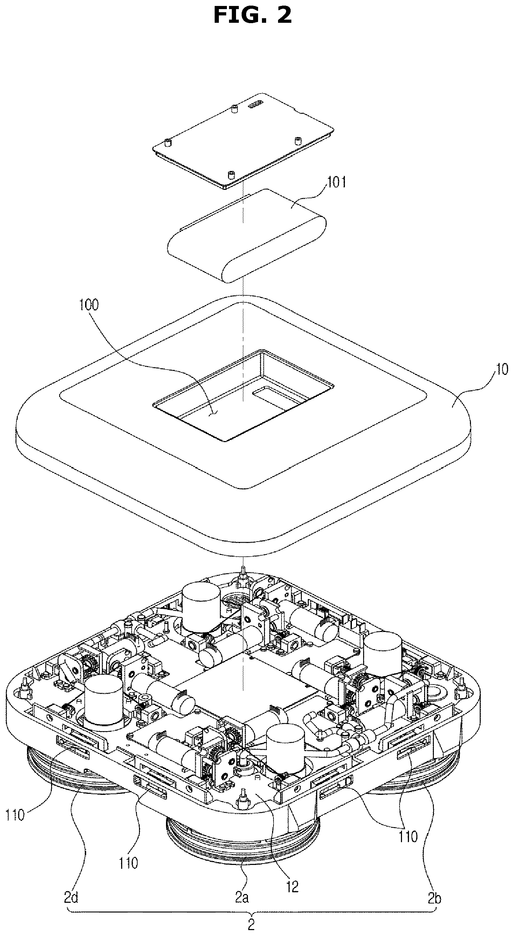

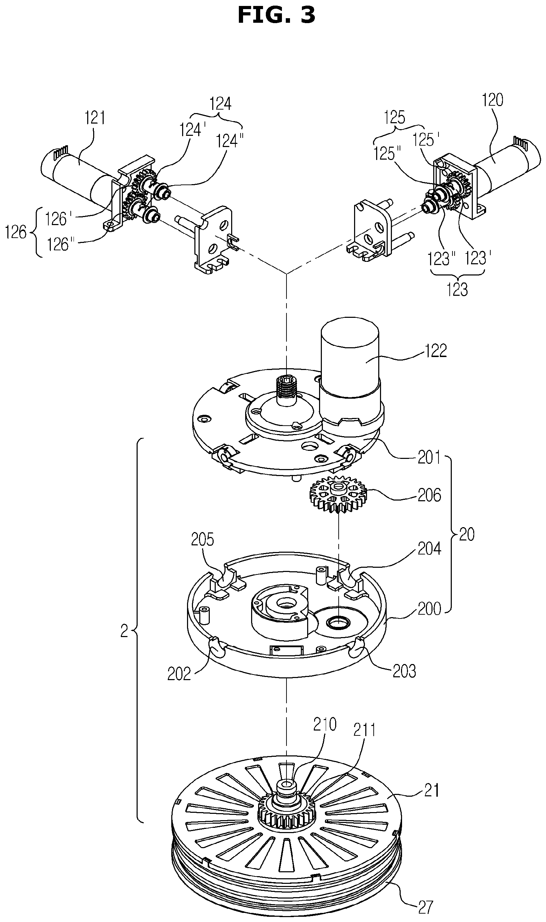

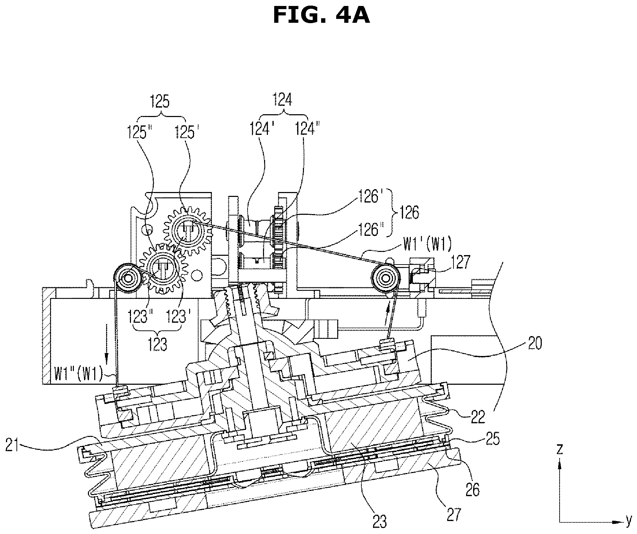

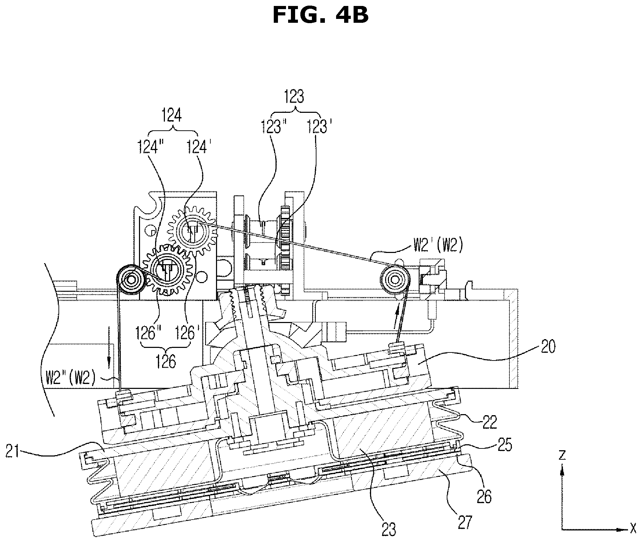

FIG. 1 is a perspective view of a robot cleaner in accordance with one or more embodiment, FIG. 2 is a view illustrating a state in which a cover of a robot cleaner is removed in accordance with one or more embodiment, FIG. 3 is an exploded perspective view partially illustrating a robot cleaner in accordance with one or more embodiment, and FIG. 4A and 4B are cross-sectional views partially illustrating a robot cleaner in accordance with one or more embodiment.

Referring to FIGS. 1 to 4B, a robot cleaner 1 in accordance with one or more embodiment may include a plurality of pad assemblies 2. A pad 27 may be installed at a bottom surface of the pad assembly 2. A floor surface may be wet-cleaned by the pad 27. The pad assembly 2 may scrub the floor surface. The robot cleaner 1 may move in various directions using a non-uniform frictional force between the pad assembly 2 and the floor surface.

An upper portion of the robot cleaner 1 may be covered by a cover 10. A water tank receiving portion 100 may be provided at one side of the cover 10. A water tank 101 may be received in the water tank receiving portion 100. Water stored in the water tank 101 may be supplied to the pad assembly 2 through a water supplying tube (not shown). The pad assembly 2 may receive the water from the water tank 101 and wet-clean the floor surface. A bumper 11 may be provided at each side surface of the robot cleaner 1. A shock applied from an external obstacle to the robot cleaner 1 may be cushioned by the bumper 11.

A sensor 110 may be provided at one side of the bumper 11. The sensor 110 may include an obstacle detecting sensor, a position detecting sensor, and so on. An obstacle located at a front side of the robot cleaner 1 may be detected by the sensor 110. The sensor 110 may communicate with a sensor provided at a docking station or a pad replacing device, and guide the robot cleaner 1 to the docking station or the pad replacing device.

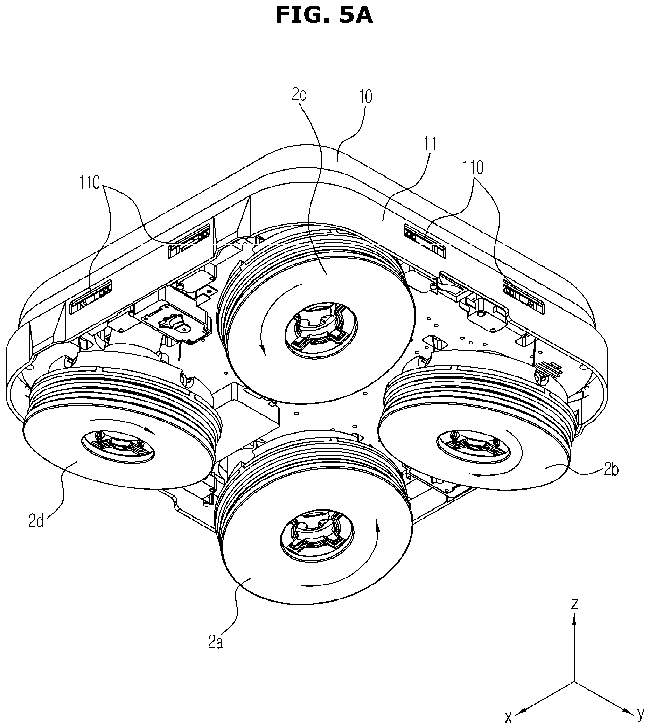

The pad assembly 2 may be installed at a base 12, and the plurality of pad assemblies 2 may be provided. Hereinafter, one or more embodiment in which the pad assembly 2 may include a first pad assembly 2a, a second pad assembly 2b, a third pad assembly 2c, and a fourth pad assembly 2d will be described (see Fig. 5a). Since the first pad assembly 2a, the second pad assembly 2b, the third pad assembly 2c, and the fourth pad assembly 2d may have the same configuration, the pad assembly 2 means at least one of the first pad assembly 2a, the second pad assembly 2b, the third pad assembly 2c, and the fourth pad assembly 2d.

The pad assembly 2 may be driven by a motor. The motor may include a first motor 120, a second motor 121, and a third motor 122. The first and second motors 120 and 121 may be disposed at the base 12, and the third motor 122 may be installed at the pad assembly 2. The pad assembly 2 may scrub the floor surface while being rotated by the third motor 122.

A first shaft 123 may be connected to the first motor 120. The first shaft 123 may be rotated by the first motor 120. A first wire W1 may be connected to the first shaft 123. When the first shaft 123 is rotated in a clockwise or counterclockwise direction by the first motor 120, the first wire W1 may be wound on the first shaft 123.
One end or the other end of the first wire W1 may be fixed to the pad assembly 2. When the first shaft 123 is rotated and the first wire W1 is wound on the first shaft 123, the pad assembly 2 may be tilted by the first wire W1.

As an example, when the first shaft 123 is rotated and the first wire W1 is wound on the first shaft 123, the pad assembly 2 may be tilted with respect to an x-axis by the first wire W1. If the pad assembly 2 is tilted and the pad assembly 2 is rotated around a z-axis by the third motor 122, a non-uniform frictional force may be generated between a bottom surface of the pad assembly 2 and the floor surface.

Only one first shaft 123 may be provided and the first wire W1 may be fixed thereto. The first shaft 123 may include a first driving shaft 123' connected with the first motor 120 and a first connection shaft 123". The first driving shaft 123' and the first connection shaft 123" may be connected through a gear 125. The first driving shaft 123' may have a first driving gear 125', and the first connection shaft 123" may have a first connection gear 125". The first driving gear 125' and the first connection gear 125" may be engaged with each other.

When a driving force of the first motor 120 is transmitted to the first driving shaft 123', the first connection shaft 123" may be rotated together with the first driving shaft 123' through the gear connection. The first driving shaft 123' and the first connection shaft 123" may be rotated in opposite directions to each other. For example, if the first driving shaft 123' is rotated in the clockwise direction, the first connection shaft 123" may be rotated in the counterclockwise direction.

Two first wires W1' and W1" may be provided, and one end of one of the first wires W1' may be fixed to the first driving shaft 123' and the other end thereof may be fixed to one side of the pad assembly 2, and one end of the other first wire W1" may be fixed to the first connection shaft 123" and the other end thereof may be fixed to the other side of the pad assembly 2. If one of the wire W1' connected to the first driving shaft 123' and the wire W1" connected to the first connection shaft 123" is wound on the corresponding shaft, the other one may be released from the other corresponding shaft.

For example, if the first wire W1' connected to the first driving shaft 123' lifts up one side of the pad assembly 2, the first wire W1" connected to the first connection shaft 123" lifts down the other side of the pad assembly 2 so that the bottom surface of the other side of the pad assembly 2 may be closer to the floor surface. Therefore, the bottom surface of the other side of the pad assembly 2 may be tilted with respect to the x-axis. When the pad assembly 2 is rotated around the z-axis by the third motor 122, the frictional force between the pad assembly 2 and the floor surface may be generated non-uniformly.

A second shaft 124 may be connected to the second motor 121. The second shaft 124 may be rotated by the second motor 121. A second wire W2 may be connected to the second shaft 124. When the second shaft 124 is rotated in the clockwise or counterclockwise direction by the second motor 121, the second wire W2 may be wound on the second shaft 124. A straight line passing through from the pad assembly 2 to a position at which the second wire W2 is installed may be perpendicular to a straight line passing through from the pad assembly 2 to a position at which the first wire W1 is installed.

One end and/or the other end of the second wire W2 may be fixed to the pad assembly 2. When the second shaft 124 is rotated and the second wire W2 is wound on the second shaft 124, the pad assembly 2 may be tilted by the second wire W2. As an example, when the second shaft 124 is rotated and the second wire W2 is wound on the second shaft 124, the pad assembly 2 may be tilted with respect to a y-axis by the second wire W2. If the pad assembly 2 is tilted and the pad assembly 2 is rotated around the z-axis by the third motor 122, the non-uniform frictional force may be generated between the bottom surface of the pad assembly 2 and the floor surface.

Only one second shaft 124 may be provided and the second wire W2 may be fixed thereto. Like in the first shaft 123, the second shaft 124 may include a second driving shaft 124' connected with the second motor 121 and a second connection shaft 124". The second driving shaft 124' and the second connection shaft 124" may be connected through a gear 126. The second driving shaft 124' may have a third driving gear 126', and the second connection shaft 124" may have a fourth connection gear 126". The third driving gear 126' and the fourth connection gear 126" may be engaged with each other.

When a driving force of the second motor 121 is transmitted to the second driving shaft 124', the second connection shaft 124" may be rotated together with the second driving shaft 124' through the gear connection. The second driving shaft 124' and the second connection shaft 124" may be rotated in opposite directions to each other. For example, if the second driving shaft 124' is rotated in the clockwise direction, the second connection shaft 124" may be rotated in the counterclockwise direction.

Two second wires W2' and W2" may be provided, and one end of one of the second wires W2' may be fixed to the second driving shaft 124' and the other end thereof may be fixed to one side of the pad assembly 2, and one end of the other second wire W2" may be fixed to the second connection shaft 124" and the other end thereof may be fixed to the other side of the pad assembly 2. If one of the wire W2' connected to the second driving shaft 124' and the wire W2" connected to the second connection shaft 124" is wound on the corresponding shaft, the other one may be released from the other corresponding shaft. For example, if the second wire W2' connected to the second driving shaft 124' lifts up one side of the pad assembly 2, the second wire W2" connected to the second connection shaft 124" lifts down the other side of the pad assembly 2 so that the bottom surface of the other side of the pad assembly 2 may be closer to the floor surface. Therefore, the bottom surface of the other side of the pad assembly 2 may be tilted with respect to the y-axis. When the pad assembly 2 is rotated around the z-axis by the third motor 122, the frictional force between the pad assembly 2 and the floor surface may be generated non-uniformly.

Since the pad assembly 2 is tilted by the first motor 120 or the second motor 121, and also rotated in the clockwise or counterclockwise direction by the third motor 122, the robot cleaner 1 may move in a particular direction, while the floor surface is cleaned by the pad assembly 2.

That is, the first pad assembly 2a, the second pad assembly 2b, the third pad assembly 2c, or the fourth pad assembly 2d may be connected with the separate first or second motor. The first pad assembly 2a, the second pad assembly 2b, the third pad assembly 2c, or the fourth pad assembly 2d may be tilted with respect to the x or y axis by the first motor or the second motor. Further, the first pad assembly 2a, the second pad assembly 2b, the third pad assembly 2c, or the fourth pad assembly 2d each may include a separate third motor. The first pad assembly 2a, the second pad assembly 2b, the third pad assembly 2c, or the fourth pad assembly 2d may be rotated in the clockwise or counterclockwise direction by the third motor to scrub the floor surface.

The first motor 120 and the second motor 121 which may tilt the first pad assembly 2a, the second pad assembly 2b, the third pad assembly 2c, or the fourth pad assembly 2d may be provided at the base 12. The third motor 122 which may rotate the first pad assembly 2a, the second pad assembly 2b, the third pad assembly 2c, or the fourth pad assembly 2d around the z-axis in the clockwise or counterclockwise direction may be installed at each of the first pad assembly 2a, the second pad assembly 2b, the third pad assembly 2c, and the fourth pad assembly 2d.

Meanwhile, the first wire W1 and second wire W2 may be steel wires. A tensile force of the first wire W1 may be controlled by a tension control device 127. As an example, the first wire W1 may be provided to be wound on the tension control device 127. The tensile force of the first wire W1 which connects the first shaft 123 and the pad assembly 2 may be control to be increased or reduced by winding the first wire W1 on or releasing the first wire W1 from the tension control device 127. The tension control device 127 may be provided so that the first wire W1 extends and connects along a minimum distance route between the first shaft 123 and the pad assembly 2, or that the first wire W1 is pulled and thus detours and connects around the minimum distance route between the first shaft 123 and the pad assembly 2.

The second wire W2 may also be connected with a tension control device (not shown) so that a tensile force thereof is controlled. The tension control device (not shown) connected to the second wire W2 may have a configuration similar to the tension control device 127 connected to the first wire W1.

Since the pad assembly 2 may be connected to the motor through the wires W1 and W2 to be tilted, a smaller torque than when being connected by a link frame may be applied to the motor. When the pad assembly and the motor are connected by the link frame, the motor may generate an output having a torque value obtained by multiplying a length of the link by a magnitude of force applied to the pad assembly. However, when the pad assembly and the motor are connected by the wire, the motor may only need to generate an output having a torque value obtained by multiplying a diameter of the shaft on which the wire is wound by the magnitude of the force applied to the pad assembly. It may be expected that the diameter of the shaft on which the wire is wound will be much smaller than the length of the link. Therefore, when the pad assembly and the motor are connected by the wire, it may be possible to use a motor having a small output, and thus it may be possible to reduce manufacturing costs of the robot cleaner 1. Further, when using the wire, it may be possible to reduce a volume of the robot cleaner 1 compared to a robot cleaner using the link. Accordingly, the robot cleaner 1 may have a smaller size.

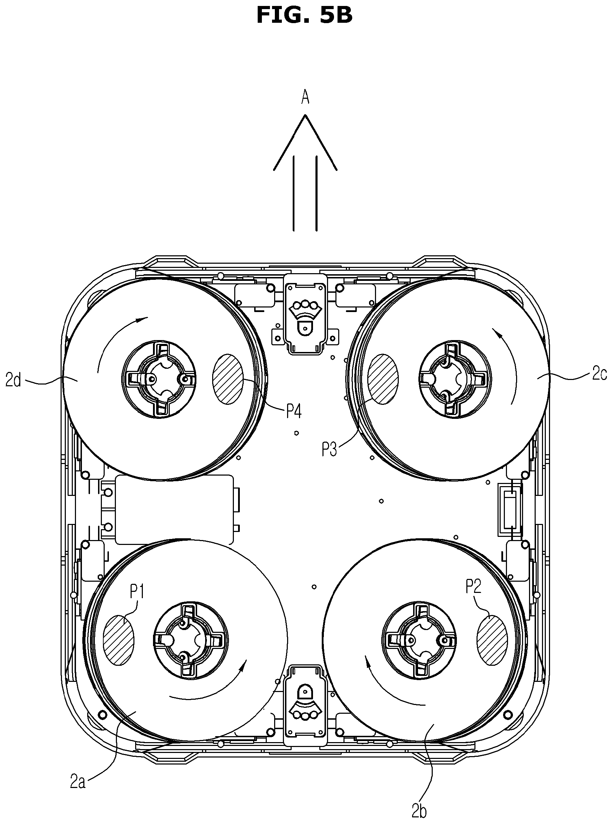

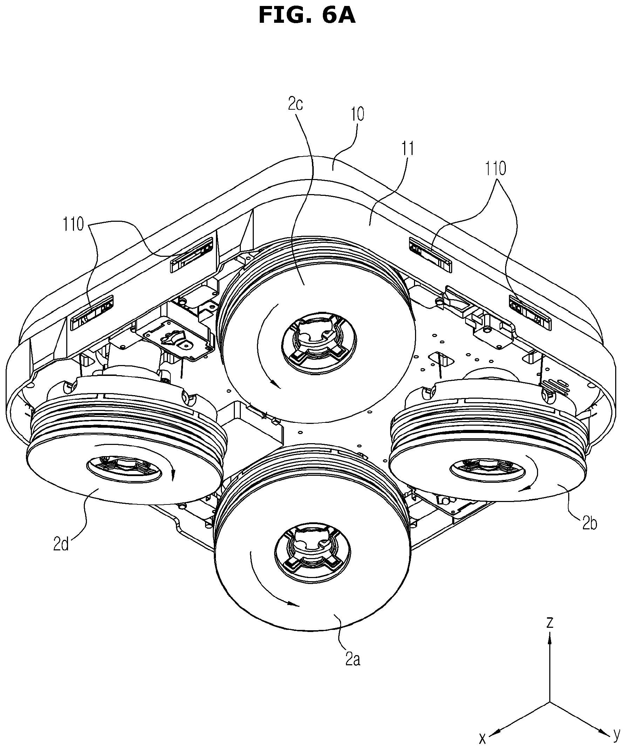

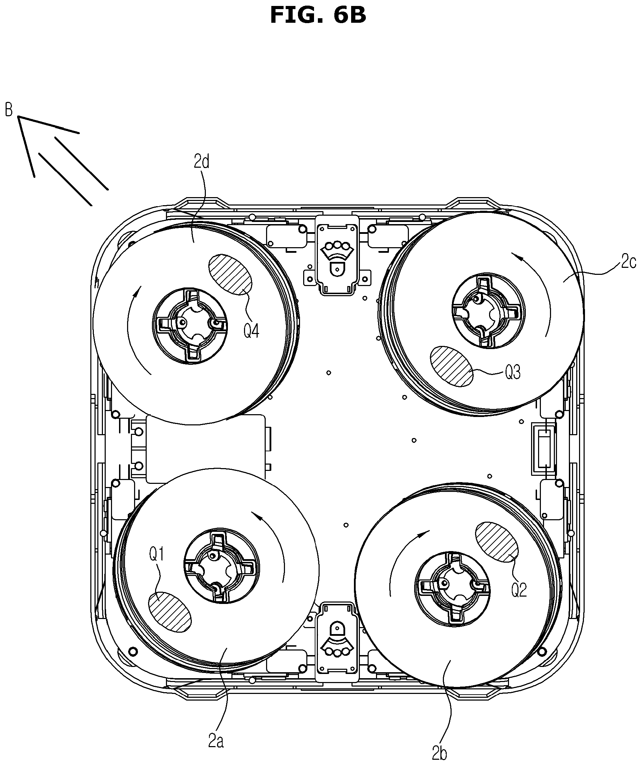

FIGS. 5A and 5B are views respectively illustrating a state in which the robot cleaner moves forward in accordance with one or more embodiment, and FIGS. 6A and 6B are views respectively illustrating a state in which the robot cleaner moves diagonally in accordance with one or more embodiment.

Referring to FIGS. 5A to 6B, the robot cleaner 1 in accordance with one or more embodiment may move in a particular direction by the non-uniform frictional force between the pad assembly 2 and the floor surface. Specifically, the robot cleaner 1 may move in a direction having a large frictional force between the bottom surface of the pad assembly 2 and the floor surface. A driving speed of the robot cleaner 1 may be varied by a rotational speed of the third motor 122.

As an example, the first pad assembly 2a may be tilted with respect to the x-axis so that a portion P1 has the greatest frictional force with the floor surface, and may also be rotated around the z-axis in the counterclockwise direction. The second pad assembly 2b may be tilted with respect to the x-axis so that a portion P2 has the greatest frictional force with the floor surface, and may also be rotated around the z-axis in the clockwise direction. The third pad assembly 2c may be tilted with respect to the x-axis so that a portion P3 has the greatest frictional force with the floor surface, and may also be rotated around the z-axis in the counterclockwise direction. The fourth pad assembly 2d may be tilted with respect to the x-axis so that a portion P4 has the greatest frictional force with the floor surface, and may also be rotated around the z-axis in the clockwise direction. In this case, as illustrated in FIGS. 5A and 5B, the robot cleaner 1 may move in a direction A (a forward direction).

As another example, the first pad assembly 2a may be tilted with respect to the x-axis and the y-axis so that a portion Q1 has the greatest frictional force with the floor surface, and may also be rotated around the z-axis in the counterclockwise direction. The second pad assembly 2b may be tilted with respect to the x-axis and the y-axis so that a portion Q2 has the greatest frictional force with the floor surface, and may also be rotated around the z-axis in the clockwise direction. The third pad assembly 2c may be tilted with respect to the x-axis and the y-axis so that a portion Q3 has the greatest frictional force with the floor surface, and may also be rotated around the z-axis in the counterclockwise direction. The fourth pad assembly 2d may be tilted with respect to the x-axis and the y-axis so that a portion Q4 has the greatest frictional force with the floor surface, and may also be rotated around the z-axis in the clockwise direction. In this case, as illustrated in FIGS. 6A and 6B, the robot cleaner 1 may move in a direction B (a diagonal direction).

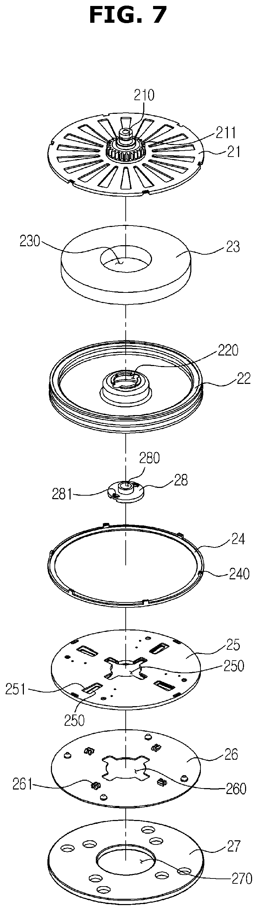

FIG. 7 is an exploded perspective view of the pad assembly of the robot cleaner in accordance with one or more embodiment.

Referring to FIGS. 3, 4, and 7, the pad assembly 2 of the robot cleaner 1 in accordance with one or more embodiment may include an installation part 20 which may be installed at the base 12, a rotational plate 21 which may be rotatably connected to the installation part 20, an elastic member assembly 22, 23, 24, a locking part 25, a pad unit 26, 27 and a water supplying member 28.

The installation part 20 is installed at the base 12. The rotational plate 21 may be rotatably installed at a bottom surface of the installation part 20 via a ball joint. The first and second wires W1 and W2 may be installed at the installation part 20. The installation part 20 may include a first wire installation part 203, 205 at which the first wire W1 may be installed and a second wire installation part 202, 204 at which the second wire W2 may be installed. When seeing the installation part 20 from an upper side, the first wire W1 and the second wire W2 may be provided to intersect with each other. For example, the first wire installation part 203, 205 and the second wire installation part 202, 204 may be alternately disposed. That is, the first wire installation part 203, the second wire installation part 202, the first wire installation part 205, and the second wire installation part 204 may be disposed in turn along an outer circumferential surface of the installation part 20 in the clockwise direction.

The third motor 122 may be installed at the installation part 20. The third motor 122 may be connected with a driving gear 206. The driving gear 206 may be engaged with a gear 211 provided at the rotational plate 21 to transmit a driving force of the third motor 122 to the rotational plate 21. The driving gear 206 may be provided in the installation part 20.

The rotational plate 21 may be freely rotatably disposed at the installation part 20 via the ball joint. A connection part 210 which may be in communication with the water supplying tube (not shown) connected with the water tank 101 may be provided at the rotational plate 21. The water stored in the water tank 101 may be supplied to the connection part 210 via the water supplying tube (not shown). The gear 211 may be provided at the connection part 210 to be connected with the third motor 122. The gear 211 may be engaged with the driving gear 206 in the installation part 20. When the third motor 122 is driven, the gear 211 may be engaged with the driving gear 206 and rotated. Therefore, the rotational plate 21 may be rotated around the z-axis in the clockwise or counterclockwise direction.

The elastic member assembly 22, 23, 24 may be provided at a bottom surface of the rotational plate 21. The elastic member assembly 22, 23, 24 may include an elastic member receiving part 22, an elastic body 23, and a fixing member 24. The elastic member receiving part 22 may be formed as a flexible tube having a plurality of wrinkles. The elastic member receiving part 22 may be formed of a water-resistant rubber material.

The elastic body 23 may be received in the elastic member receiving part 22. The elastic body 23 may be formed of a material such as a sponge. The entire bottom surface of the pad assembly 2 may be kept in contact with the floor surface by the elastic body 23. That is, even when the pad assembly 2 is tilted, the entire bottom surface of the pad assembly 2 may be in contact with the floor surface by the elastic body 23. However, the frictional force between the pad assembly 2 and the floor surface may be non-uniform. Since the elastic body 23 is received in the elastic member receiving part 22, the water supplied through the connection part 210 may not permeate into the elastic body 23.

The fixing member 24 may install the elastic member receiving part 22 at the rotational plate 21. The fixing member 24 may have a fixing part 240. In a state in which an upper end of the elastic member receiving part 22 is located between the rotational plate 21 and the fixing member 24, the fixing member 24 may be coupled to the rotational plate 21, and thus the elastic member receiving part 22 may be installed at the rotational plate 21. For example, the fixing member 24 and the rotational plate 21 may be coupled with each other in a hook manner.

The locking part 25 may be installed at a bottom surface of the elastic member assembly 22, 23, 24. A pad installation part 26 may be removably disposed at a bottom surface of the locking part 25. The pad installation part 26 may have an interference protrusion 261, and the locking part 25 may have a locking member 251 which may interfere with the interference protrusion 261. The locking member 251 may be provided to interfere with a part of a locking hole 250 formed in the locking part 25. If the interference protrusion 261 may pass through the locking hole 250, the interference protrusion 261 may be interfered with by the locking member 251 and thus may be fixed therein so as not to get out of the locking hole 250. Therefore, the pad installation part 26 may be installed at the locking part 25.

A pad 27 which cleans the floor surface may be installed at a bottom surface of the pad installation part 26. The pad 27 may be removably installed at the pad installation part 26 in a Velcro manner or the like.

Each of the elastic member assembly 22, 23, 24, the locking part 25, the pad installation part 26, and the pad 27 may be formed to be in communication with water supplying holes 220, 230, 250, 260, and 270 through which the water supplied from the connection part 210 of the rotational plate 21 may flow. The water supplying member 28 may be provided under the rotational plate 21. A central hole 280 in communication with the connection part 210 may be formed in a central portion of the water supplying member 28. A side hole 281 in communication with the central hole 280 may be formed at a side surface of the water supplying member 28. A plurality of side holes 281 may be provided in regular intervals. The water supplied to the water supplying member 28 through the central hole 280 may be sprayed through the side hole 281 formed at the side surface of the water supplying member 28. The water sprayed through the side hole 281 may be supplied to the pad 27 through the water supplying holes 220, 230, 250, 260, and 270. The pad 27 may receive the water and wet-clean the floor surface.

According to one or more embodiment, it is possible to miniaturize the robot cleaner. Since it is possible to use the motor which generates an output having a small torque, the manufacturing costs may be reduced. Further, the elastic member provided at the pad assembly may be maintained sanitarily.

While aspects of the present invention have been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

## Claims

1. A robot cleaner comprising:
a pad assembly (2) connected to a first motor (120) to receive a rotational force from the motor and configured to rotate in a clockwise or counterclockwise direction to clean a floor surface, **characterised in that** the robot cleaner further comprises
a first wire (W1) connected to the pad assembly and a second motor (121) so that the pad assembly is tilted by the driving force of the second motor,
wherein the robot cleaner moves in a particular direction by a non-uniform frictional force between a bottom surface of the pad assembly and the floor surface.

2. The robot cleaner according to claim 1, further comprising a second wire (W2) which tilts the pad assembly with respect to a y-axis, and
wherein the first wire tilts the pad assembly with respect to an x-axis.

3. The robot cleaner according to claim 2, further comprising:
a third motor (122) connected with the second wire.

4. The robot cleaner according to claim 3, wherein the first wire is installed at a first shaft (123) connected to the second motor to be rotated, and
the second wire is installed at a second shaft (124) connected to the third motor to be rotated.

5. The robot cleaner according to claim 4, wherein the first shaft comprises:
a first driving shaft (123') connected with the second motor; and
a first connection shaft (123") geared with the first driving shaft.

6. The robot cleaner according to claim 5, wherein the first wire comprises:
a portion (W1') configured to connect the first driving shaft and one side of the pad assembly; and
a portion (W1") configured to connect the first connection shaft and another of the pad assembly which is opposite to the one side the pad assembly.

7. The robot cleaner according to any one of claims 3 to 6, wherein the pad assembly comprises a rotational plate (21) rotated in the clockwise or counterclockwise direction by the first motor.

8. The robot cleaner according to claim 7, wherein the pad assembly comprises:
an elastic member assembly (22, 23, 24) installed at a bottom surface of the rotational plate; and
a pad unit (26, 27) installed at a bottom surface of the elastic member assembly.

9. The robot cleaner according to claim 8, wherein the elastic member assembly comprises:
an elastic body (23) configured to adapt an entire bottom surface of the pad assembly to be in contact with the floor surface; and
an elastic member receiving part (22) in which the elastic body is received.

10. The robot cleaner according to claim 9, wherein the elastic member receiving part is formed as a flexible tube having a plurality of wrinkles and formed of a rubber material.

11. The robot cleaner according to claim 9 or 10, wherein the pad unit comprises;
a pad installation part (20) removably installed at a bottom surface of the elastic member receiving part; and
a pad (27) removably installed at the pad installation part to clean the floor surface.

12. The robot cleaner according to any one of claims 8 to 11, wherein the rotational plate has a connection part (210) through which water is supplied from a water tank (101), and
the elastic member assembly and the pad unit have a water supplying hole (220, 230, 250, 260, 270) in communication with the connection part.

13. The robot cleaner according to claim 12, wherein a water supplying member (28) is installed at the rotational plate, and
the water supplying member comprises a central hole (280) in communication with the connection part and a side hole (281) formed at a side surface thereof to be in communication with the central hole.

14. The robot cleaner according to claim 13, wherein the water supplied through the connection part is sprayed through the side hole of the water supplying member.

15. The robot cleaner according to any one of the preceding claims, wherein the pad assembly is provided in plural, and each pad assembly is driven independently.

## Patentansprüche

1. Reinigungsroboter, der Folgendes umfasst:
eine Belaganordnung (2), die mit einem ersten Motor (120) verbunden ist, um eine Drehkraft von dem Motor zu empfangen, und die so konfiguriert ist, dass sie sich im Uhrzeigersinn oder gegen den Uhrzeigersinn dreht, um eine Bodenfläche zu reinigen, **dadurch gekennzeichnet, dass** der Reinigungsroboter ferner Folgendes umfasst:
einen ersten Draht (W1), der mit der Belaganordnung und einem zweiten Motor (121) verbunden ist, so dass die Belaganordnung durch die Antriebskraft des zweiten Motors geneigt wird,
wobei sich der Reinigungsroboter durch eine ungleichförmige Reibungskraft in einer bestimmten Richtung zwischen einer unteren Fläche der Belaganordnung und der Bodenfläche bewegt.

2. Reinigungsroboter nach Anspruch 1, der ferner einen zweiten Draht (W2) umfasst, der die Belaganordnung in Bezug auf eine y-Achse neigt, und
wobei der erste Draht die Belaganordnung in Bezug auf eine x-Achse neigt.

3. Reinigungsroboter nach Anspruch 2, der ferner Folgendes umfasst:
einen dritten Motor (122), der mit dem zweiten Draht verbunden ist.

4. Reinigungsroboter nach Anspruch 3, wobei der erste Draht an einer ersten Welle (123) angebracht ist, die mit dem zweiten zu drehenden Motor verbunden ist, und
der zweite Draht an einer zweiten Welle (124) angebracht ist, die mit dem dritten zu drehenden Motor verbunden ist.

5. Reinigungsroboter nach Anspruch 4, wobei die erste Welle Folgendes umfasst:
eine erste Antriebswelle (123'), die mit dem zweiten Motor verbunden ist; und
eine erste Verbindungswelle (123"), die mit der ersten Antriebswelle in Eingriff ist.

6. Reinigungsroboter nach Anspruch 5, wobei der erste Draht Folgendes umfasst:
einen Abschnitt (Wl`), der so konfiguriert ist, dass er die erste Antriebswelle und eine Seite der Belaganordnung verbindet; und
einen Abschnitt (W1"), der so konfiguriert ist, dass er die erste Verbindungswelle und eine andere Seite der Belaganordnung verbindet, die der einen Seite der Belaganordnung gegenüber liegt.

7. Reinigungsroboter nach einem der Ansprüche 3 bis 6, wobei die Belaganordnung eine Drehplatte (21) umfasst, die durch den ersten Motor im Uhrzeigersinn oder gegen den Uhrzeigersinn gedreht wird.

8. Reinigungsroboter nach Anspruch 7, wobei die Belaganordnung Folgendes umfasst:
eine Anordnung (22, 23, 24) eines elastischen Elements, die an einer unteren Fläche der Drehplatte angebracht ist; und
eine Belageinheit (26, 27), die an einer unteren Fläche der Anordnung des elastischen Elements angebracht ist.

9. Reinigungsroboter nach Anspruch 8, wobei die Anordnung des elastischen Elements Folgendes umfasst:
einen elastischen Körper (23), der dafür konfiguriert ist, eine gesamte untere Fläche der Belaganordnung so anzupassen, dass sie mit der Bodenfläche in Kontakt ist; und
ein Aufnahmeteil (22) des elastischen Elements, in dem der elastische Körper aufgenommen wird.

10. Reinigungsroboter nach Anspruch 9, wobei das Aufnahmeteil des elastischen Elements als ein flexibles Rohr gebildet ist, das eine Vielzahl von Falten aufweist und aus einem Gummimaterial gebildet ist.

11. Reinigungsroboter nach Anspruch 9 oder 10, wobei die Belageinheit Folgendes umfasst:
ein Belaginstallationsteil (20), das abnehmbar an einer unteren Fläche des Aufnahmeteils des elastischen Elements angebracht ist; und
einen Belag (27), der abnehmbar an dem Belaginstallationsteil angebracht ist, um die Bodenfläche zu reinigen.

12. Reinigungsroboter nach einem der Ansprüche 8 bis 11, wobei die Drehplatte ein Verbindungsteil (210) aufweist, durch das Wasser von einem Wassertank (101) zugeführt wird, und
die Anordnung des elastischen Elements und die Belageinheit ein Wasserversorgungsloch (220, 230, 250, 260, 270) aufweisen, das mit dem Verbindungsteil in Verbindung steht.

13. Reinigungsroboter nach Anspruch 12, wobei ein Wasserversorgungselement (28) an der Drehplatte angebracht ist, und
das Wasserversorgungselement Folgendes umfasst: ein zentrales Loch (280), das mit dem Verbindungsteil in Verbindung steht, und ein Seitenloch (281), das an einer Seitenfläche davon gebildet ist, um mit dem zentralen Loch in Verbindung zu stehen.

14. Reinigungsroboter nach Anspruch 13, wobei das durch das Verbindungsteil zugeführte Wasser durch das Seitenloch des Wasserversorgungselements gesprüht wird.

15. Reinigungsroboter nach einem der vorhergehenden Ansprüche, wobei die Belaganordnung in einer Vielzahl bereitgestellt wird und jede Belaganordnung unabhängig angetrieben wird.

## Revendications

1. Robot nettoyeur comprenant :
un ensemble patin (2) raccordé à un premier moteur (120) pour recevoir une force rotative en provenance du moteur, et configuré de façon à tourner dans un sens horaire ou anti-horaire pour nettoyer une surface du sol, **caractérisé en ce que** le robot nettoyeur comprend en outre :
un premier fil métallique (W1) raccordé à l'ensemble patin et un deuxième moteur (121) de sorte que l'ensemble patin soit incliné par la force d'entraînement du deuxième moteur,
cas dans lequel le robot nettoyeur se déplace suivant un sens particulier en vertu d'une force de friction non uniforme entre une surface inférieure de l'ensemble patin et la surface du sol.

2. Robot nettoyeur selon la revendication 1, comprenant en outre un deuxième fil métallique (W2) qui incline l'ensemble patin par rapport à un axe y, et
cas dans lequel le premier fil métallique incline l'ensemble patin par rapport à un axe x.

3. Robot nettoyeur selon la revendication 2, comprenant en outre :
un troisième moteur (122) en raccordement avec le deuxième fil métallique.

4. Robot nettoyeur selon la revendication 3, le premier fil métallique étant installé au niveau d'un premier arbre (123) raccordé au deuxième moteur devant être tourné, et
le deuxième fil métallique étant installé au niveau d'un deuxième arbre (124) raccordé au troisième moteur devant être tourné.

5. Robot nettoyeur selon la revendication 4, le premier arbre comprenant :
un premier arbre d'entraînement (123') en raccordement avec le deuxième moteur ; et
un premier arbre de raccordement (123") engrené avec le premier arbre d'entraînement.

6. Robot nettoyeur selon la revendication 5, le premier fil métallique comprenant :
une portion (Wl') configurée de façon à raccorder le premier arbre d'entraînement et un côté de l'ensemble patin ; et
une portion (W1") configurée de façon à raccorder le premier arbre de raccordement et un autre de l'ensemble patin qui est opposé audit un côté de l'ensemble patin.

7. Robot nettoyeur selon l'une quelconque des revendications 3 à 6, l'ensemble patin comprenant une plaque rotative (21) qui est tournée dans le sens horaire ou anti-horaire par le premier moteur.

8. Robot nettoyeur selon la revendication 7, l'ensemble patin comprenant :
un ensemble élément élastique (22, 23, 24) installé au niveau d'une surface inférieure de la plaque rotative ; et
une unité patin (26, 27) installée au niveau d'une surface inférieure de l'ensemble élément élastique.

9. Robot nettoyeur selon la revendication 8, l'ensemble élément élastique comprenant :
un corps élastique (23) configuré de façon à adapter une surface inférieure entière de l'ensemble patin pour qu'elle soit en contact avec la surface du sol ; et
une pièce réceptrice d'élément élastique (22) dans laquelle le corps élastique est reçu.

10. Robot nettoyeur selon la revendication 9, la pièce réceptrice d'élément élastique étant formée comme un tube flexible possédant une pluralité de plis et formé en une matière de caoutchouc.

11. Robot nettoyeur selon la revendication 9 ou 10, l'unité patin comprenant :
une pièce d'installation de patin (20) installée de manière amovible au niveau d'une surface inférieure de la pièce réceptrice d'élément élastique ; et
un patin (27) installé de manière amovible au niveau de la pièce d'installation de patin pour nettoyer la surface du sol.

12. Robot nettoyeur selon l'une quelconque des revendications 8 à 11, la plaque rotative possédant une pièce de raccordement (210) à travers laquelle l'eau est fournie à partir d'un réservoir d'eau (101), et
l'ensemble élément élastique et l'unité patin possédant un trou d'alimentation en eau (220, 230, 250, 260, 270) en communication avec la pièce de raccordement.

13. Robot nettoyeur selon la revendication 12, un élément d'alimentation en eau (28) étant installé au niveau de la plaque rotative, et
l'élément d'alimentation en eau comprenant un trou central (280) en communication avec la pièce de raccordement et un trou latéral (281) formé au niveau d'une surface latérale de celui-ci pour être en communication avec le trou central.

14. Robot nettoyeur selon la revendication 13, l'eau fournie à travers la pièce de raccordement étant pulvérisée à travers le trou latéral de l'élément d'alimentation en eau.

15. Robot nettoyeur selon l'une quelconque des revendications précédentes, l'ensemble patin étant prévu en pluralité, et chaque ensemble patin étant entraîné indépendamment.
